# EUROPEAN PATENT SPECIFICATION

(11) **EP 0 544 694 B1**
(45) Date of publication and mention of the grant of the patent: **27.12.1995**
(21) Application number: 91913141.7
(22) Date of filing: 09.07.1991
(51) Int. Cl.: B62D 27/06, B62D 33/037

(54) **A METHOD OF MANUFACTURING STANCHIONS FOR LOAD PLATFORMS AND A STANCHION MANUFACTURED ACCORDING TO THE METHOD**
VERFAHREN ZUR HERSTELLUNG VON RUNGEN FÜR LADEPLATTFORMEN UND GEMÄSS DEM VERFAHREN HERGESTELLTE RUNGEN
PROCEDE DE FABRICATION D'ETAN ONS POUR DES PLATEFORMES DE CHARGEMENT ET ETAN ONS FABRIQUES SELON LE PROCEDE

(30) Priority: 09.07.1990 SE 9002395
(43) Date of publication of application: 09.06.1993
(73) Proprietor: ROSEN, Göran, 531 16 Lidköping (SE)
(72) Inventor: ROSEN, Göran, 531 16 Lidköping (SE)
(74) Representative: Roth, Ernst Adolf Michael
(86) International application number: SE9100485
(87) International publication number: WO9200867

(56) References cited:
- EP-A- 0 177 473
- EP-A- 0 302 270
- WO-A-83/01420
- SE-B- 457 163

## Description

The present invention refers to a method to produce stanchions for load platforms, which stanchions comprise in a stanchion housing provided locking mechanisms, for locking of partly the stanchion to the load platform and partly at least a platform flap to the stanchion, and possibly a third locking mechanism for locking of an extension part to the stanchion top, the invention also refers to a stanchion produced according to the method.

### Background of the invention

Stanchions for load platforms of the type mentioned above, e.g. DE-C-1580650, since the mid- sixties, when these were developed, have gone through relatively small changes. The still consist of a large number of mechanically cooperating parts, where every single part demands machining und surface conditioning and assembly, which results in relatively high cost of manufacture.

The housing of the stanchion until now has been produced from two or several parts, namely a solid, rear sheet and a U- formed covering sheet, which is welded to the rear sheet, after locating and mounting of all locking mechanisms. After the welding of the rear sheet to the covering sheet, and an aligning of the stanchion also has been necessary in addition to a further surface conditioning.

A complete stanchion program comprises front, lateral and rear stanchions in a large amount of designs, where the height, the number of flap locks, the design of the attachment of the load platform, with or without cover support, with or without TIR loop and so on may vary. This means that in spite of a considerable standardization of the components included the number of parts is still very large, which in turn leads to extensive storage space.

Certain attempts have been made (WO 83/01420) to simplify the manufacture of stanchions for load platforms by using specially manufactured aluminium profiles in as large extent as possible. Its true that a stanchion of this type as for the weight will be lighter and demands less surface treatment, but for the rest the drawbacks mentioned above will remain. Moreover such a stanchion ist nearly impossible to straighten if it has been exposed to a deformation, which often occurs, since the load during transport easily is displaced and the stanchions have to absorb these stresses.

The same requirements which have been proposed concerning the design of the stanchion to the same high degree applies to the extension part of the stanchion which connects this with the handrail of the cover support. This extension part, which in the continuation is called a cover support, formerly has also been manufactured from combined steel profiles, which results in that they are heavy when handled manually, which is due to occur as soon as the opening of the load platform has to be wider than the distance between two cover supports. Another drawback with present cover supports has been that a relatively large force is required at the connection of the stanchion with the cover support, which moreover is aggravated by the circumstance, that the connection between these two parts occurs at the top of the stanchion, which as a rule is located a distance above normal height of a man referred to the ground.

### The object of the invention

The object of the invention is to provide a cover support which is simple in design but at the same time light weight, and stanchion, which meet the above mentioned requirements of easy to handle, when the stanchion and the cover support are connected with each other and disconnected from each other respectively. Further it should be possible to maintain the connection between these even when the connection between the stanchion and the load platform is cancelled, so that the cover support with attached stanchion can be moved laterally hanging in a special guide in the handrail of the cover frame. These problems have been solved by the characterizing parts of the independent patent claims.

### Description of the drawings

The invention will be described in greater detail below with reference to accompanying drawings which show some embodiments of the invention.

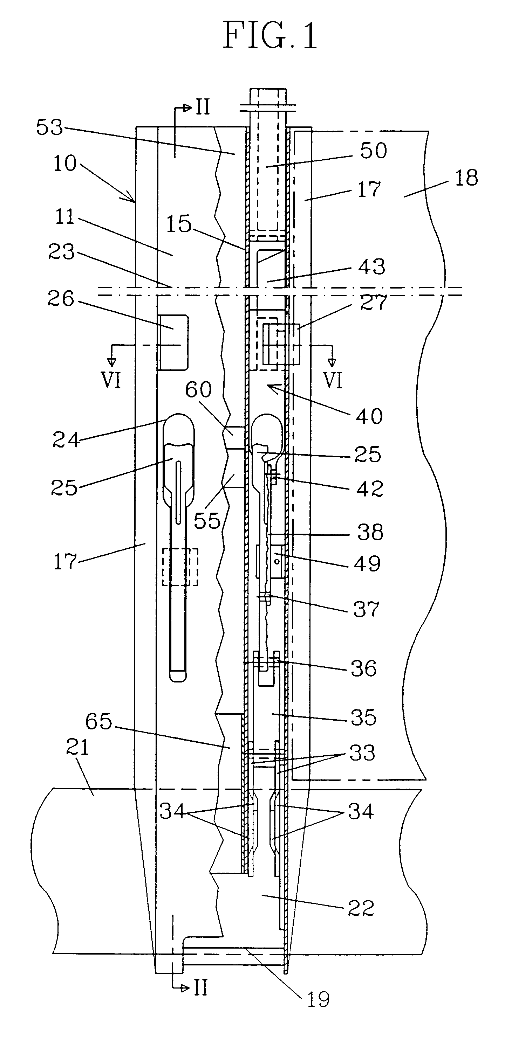

Fig. 1 shows a stanchion according to the invention in a view from the front with a part of the front side of the stanchion broken up to show the locking mechanisms of the stanchion.
Fig. 2 shows a section along the line II-II in fig. 1, with the locking mechanisms in locking position.
Fig. 3 is a view analogous to that of fig. 2 with the flap locking mechanism in open position.
Fig. 4 is likewise a section analogous to that of fig. 2 with the flap locking mechanism as well as the loading platform locking mechanism in open position.
Fig. 5 shows the stanchion according to fig. 1 in a view from the rear.
Fig. 6 is a section along the line VI-VI in fig. 1.

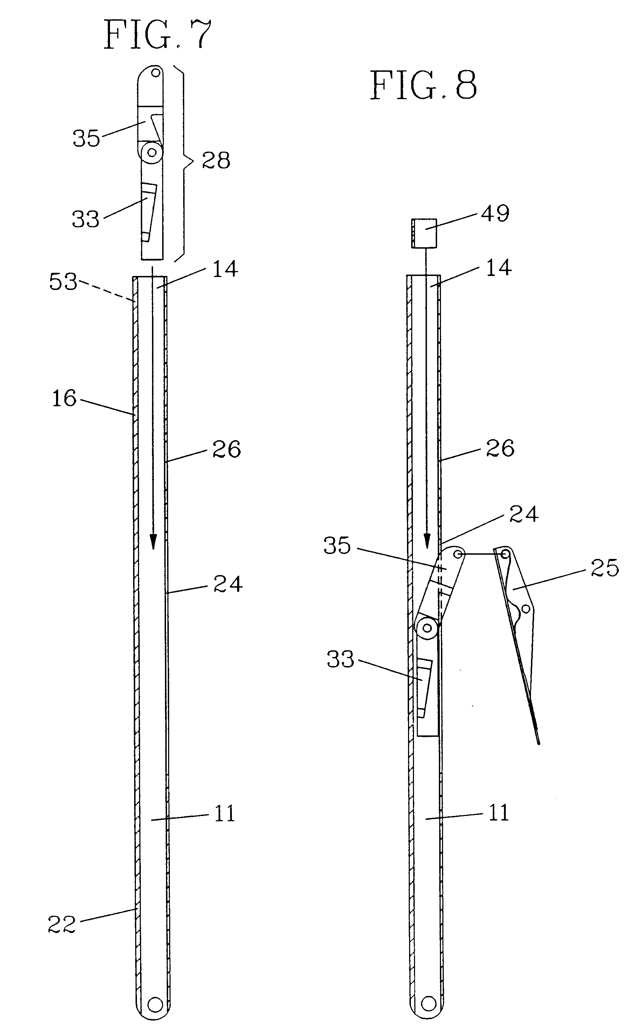

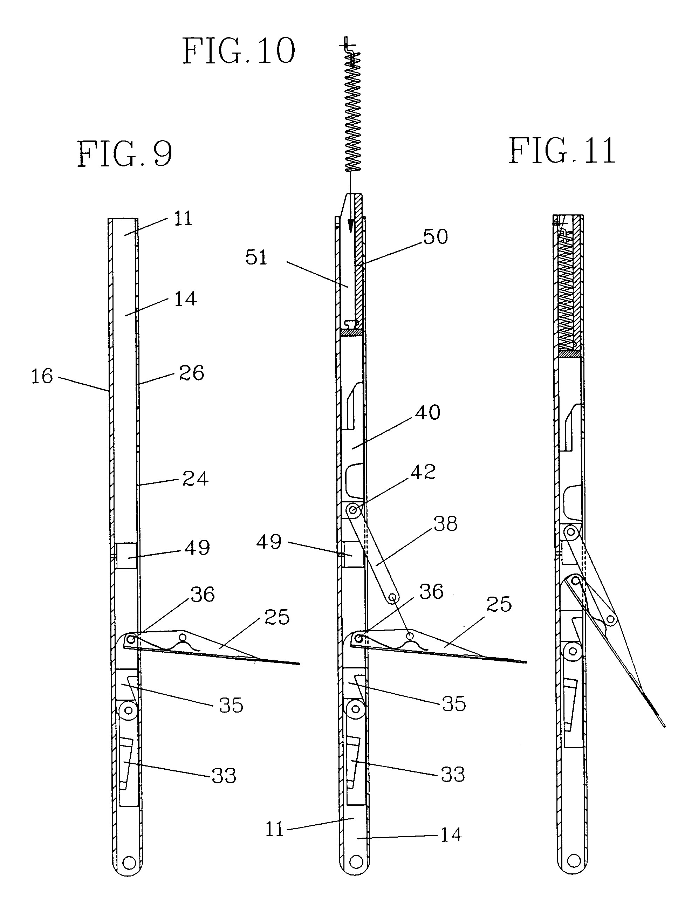

Fig. 7 - 11 show a sections through a stanchion housing during the mounting of the details of the locking mechanisms.
Fig. 12 shows a set of stanchions of different lengths containing details of the locking mechanisms in a lateral view.

### Description of embodiments

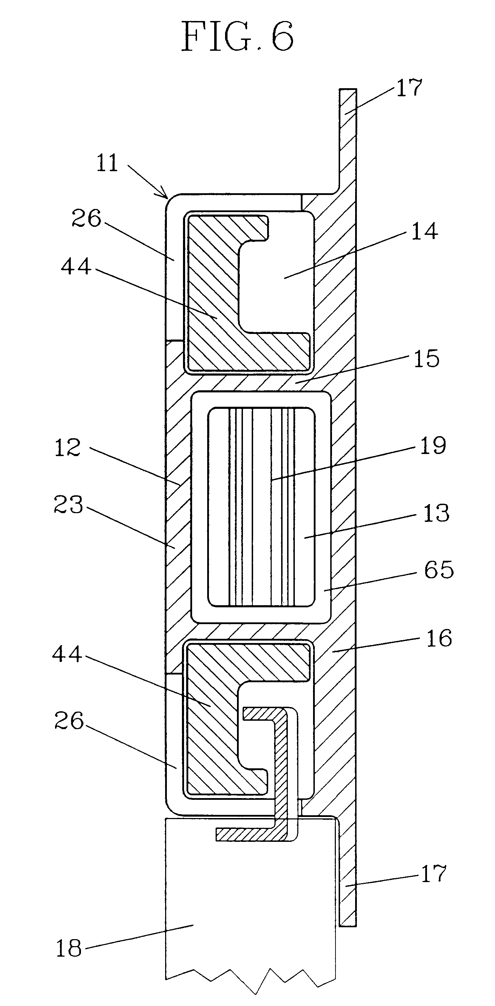

The stanchion according to the invention as a whole designated with 10 and consists of a stanchion housing 11, which is preferably constituted by an aluminium profile manufactured by extrusion and which can be cut into suitable lengths. The cross section of the stanchion housing 11 has the form of a closed hollow profile 12, as can be seen in fig. 6, and which profile is divided into two or three longitudinal channels, the one of which in the continuation is called reinforcement channel 13 and the other or the others for locking channel/channels 14. The channels are separated by partition walls 15 and the stanchion housing is limited at the rear by a solid rear wall 16, which has greater width than the width of the hollow profile 12, so that shoulder lists 17 are formed, against which load flaps 18 rest, when these are in folded up position. The stanchion housing 11 is open at the top and at the bottom and at the bottom end provided with a stanchion shaft 19 intended to be positioned in a stanchion attachment 20, which is fixedly connected to the edge beam 21 of the loading platform. In the lower part of the stanchion housing in the rear wall 16 is formed a recess 22, which mainly has the same but slighter form as the outer shape of the load platform attachment 20 and through which recess 22 the platform attachment can pass when the stanchion is swinged about the stanchion shaft 19 and to contact against the edge beam 21.

As mentioned above the stanchion may consist of two or three longitudinal channels 13, 14 depending if it is a single stanchion e.g. at the front end of the loading platform to fix one single load platform flap or also a double stanchion for fixing of one load flap 18 on each side of the stanchion. In the continuation such a double stanchion will be described in closer detail. On the front side of the stanchion housing oblong apertures 24 are machined for each control lever 25 and rectangular apertures 26, which extend from the front side of the stanchion housing and along its lateral wall to the rear wall 16, and which apertures, are intended for receiving of lock fittings 27 fixedly arranged at the edge fitting of the load flap 18.

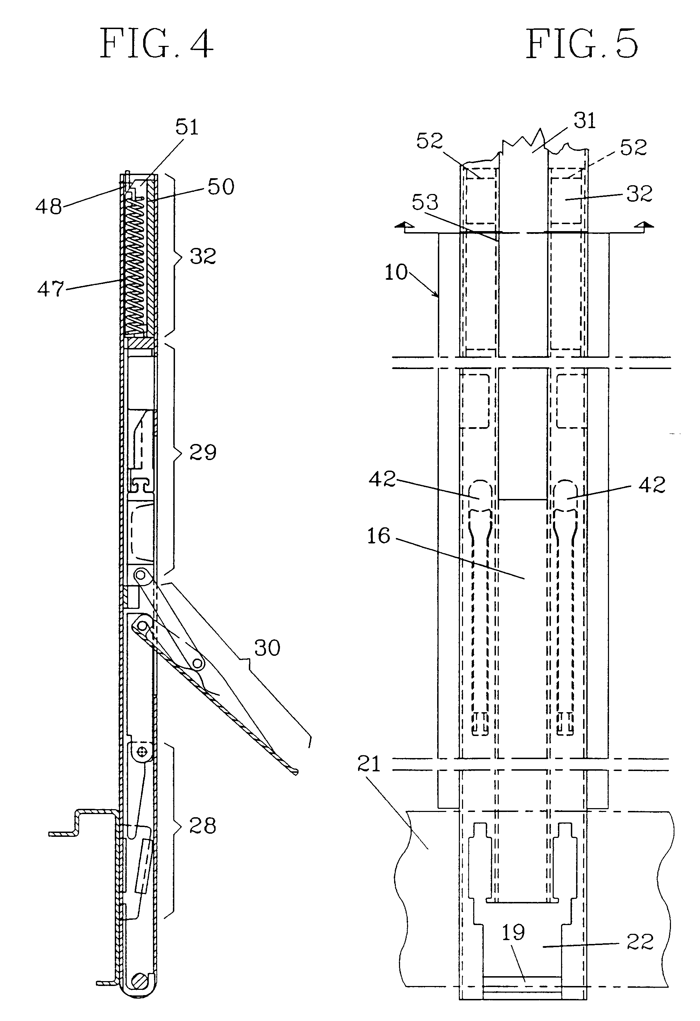

The locking channels 14 of the stanchion housing 11 - see fig. 4 - are provided partly with a load platform mechanism 28 and partly a flap locking mechanism 29, which both are interconnected by means of a control section 30. If the stanchions also are going to support cover supports 31 a suitable locking mechanism 32 is also arranged in the upper part of the locking apparatus channels 14.

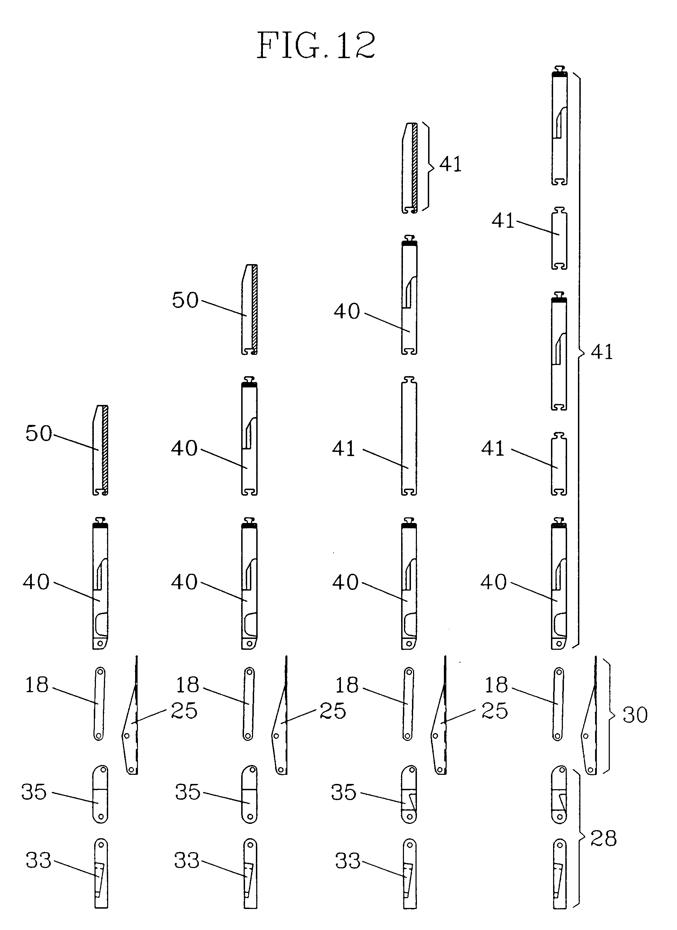

The load platform locking mechanism 28 consists as previously known of at least one locking wedge 33, which cooperates with guiding rails 34 provided at the platform attachment 20. The locking wedge 33 in its upper end is pivotably connected to an interconnection link 35, which in turn is connected by a first pivot shaft 36 to said control arm 25. at some distance from the first pivot shaft 36 is provided a second pivot shaft 37, on which a link arm 38 is articulatedly pivoted, the opposite end of which is articulatedly connected with the flap locking mechanism 29. In the embodiment shown this comprises a connection part 39, pivotably connected with said link arm 38 and a flap locking bolt 40. Depending on the width of the load flap 18 this may be provided with one, two or three lock fittings 27, which each cooperate with each flap locking bolt 40 in the stanchion, which also can be seen in fig. 12. In order to overcome the distances between the flap locking bolts 40 spacing pieces 41 are provided, which can be of different lengths.

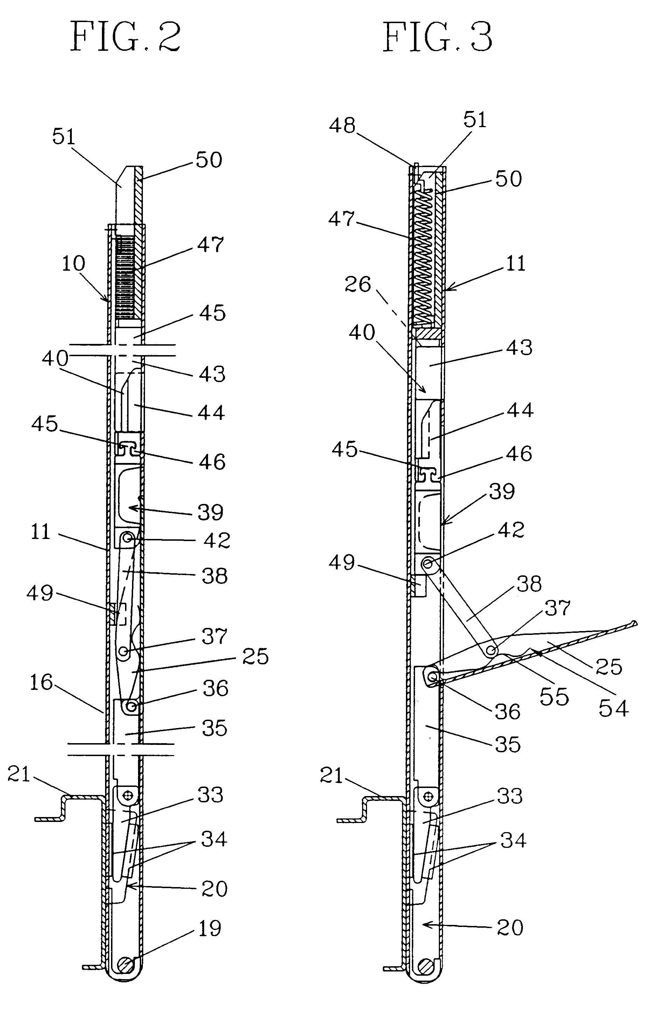

The parts contained in the flap locking mechanism 29 can be constituted by form parts, preferably of plastic, which are mutally untwistable and axially stiff and easily releasably connected to each other. This form parts with a small play fill substantially the whole cross section in the channel 14, the wall surfaces of which serve as slide and guide surfaces. Alternatively certain parts can be made of steel, while the slide and guide surfaces are made of a suitable plastic material. The connection part 39 or if this forms an integral part with the flap locking bolt 40 is provided with a recess, the object of which is to faciliate the folding out of the control lever 25. The flap locking bolt 40 comprises partly a lock port 43, through which the locking fitting 27 of the load flap 18 can be brought, and which locking port is located right ahead of the opening 26 when the locking mechanisms take the position shown in fig. 3 and 4, that is a position in which the lock fitting 27 freely can move in and out of said lock port 43. Below this is provided a locking pin 44, which in cross section is L-formed, and which locks the lock fitting 27 as well perpendicular to the plane of the flap lock as in the plane of the flap lock. As well the flap locking bolt 40 as the spacing pieces 41 at one end are formed with male formed coupling means 44 and at the opposite end with a female formed coupling means 46. On the flap locking bolt 40 located in the uppermost part of the stanchion housing 11 acts a compression spring 47, which by means of a shoulder 48 is attached to the inside of the uppermost part of the stanchion housing.

The movement upwards of the load platform locking mechanism 28 and the downward movement of the flap locking mechanism 29 are limited by a common stopping means 49, which is attached to the inside of the stanchion housing. In the folded up and locked position of the control lever 25, as can be seen in fig. 2 the locking wedge 33 is in engagement with the guide rails 34 of the load platform attachment simultaneously as the flap locking bolt 40 is located in its upper locking end position, in which the both locking mechanisms are under control of the compressed compression spring 47. Since the pivot axis 37 is located inside an imagined line through the pivoting axes 36 and 42, a stable locking position for the control lever 25 is obtained, even when this is standing under a powerful spring pressure.

If the stanchion 10 even is to be extended by an extension part, in the continuation called cover support 31, the upper flap locking bolt 40 is completed by a lock 50, which is provided with a longitudinal slot 51 for receiving the compression spring 47. In locking position one part of the lock 50 is in egagement with the locking sleeves 52 - fig. 5 - of the cover support 31. A stanchion housing 11, to which a cover support 31 shall be possible to connect, right in front of the reinforcement channel 13 at the upper part of the stanchion is formed with an opening 53 in the rear wall 16, which extends a distance downwards from the upper end edge of the stanchion.

The invention is not limited to the embodiments described and shown, but several variants are possible within the scope of the patent claims.

### DISPOSITION OF REFERENCE DESIGNATIONS

- 10: = stanchion
- 11: = stanchion housing
- 12: = hollow profile
- 13: = reinforcement channel
- 14: = locking channel
- 15: = partition wall
- 16: = rear wall
- 17: = shoulder list
- 18: = load flap
- 19: = stanchion axis
- 20: = load platform attachment
- 21: = the edge beam of the load platform
- 22: = recess in the rear wall
- 23: = front side of the stanchion housing
- 24: = oblong opening for the control arm 25
- 25: = control lever
- 26: = rectangular opening for lock fittings 27
- 27: = lock fittings
- 28: = load platform locking mechanism
- 29: = flap locking mechanism
- 30: = control section
- 31: = extension part / cover support
- 32: = locking mechanism for the cover support 31
- 33: = locking wedge
- 34: = guide rails
- 35: = connection link
- 36: = first pivoting shaft
- 37: = second pivoting skaft
- 38: = linkarm
- 39: = connection part
- 40: = flap locking bolt
- 41: = spacing pieces
- 42: = third pivoting shaft
- 43: = locking port
- 44: = locking pin
- 45: = male formed coupling means
- 46: = female formed coupling means
- 47: = compression spring
- 48: = shoulder
- 49: = stopp means
- 50: = locking device
- 51: = slot
- 52: = locking sleeve
- 53: = opening

## Claims

1. Method to produce stanchions (10) for load platforms, which stanchions comprise in a stanchion housing (11) provided locking mechanisms (28,29) for locking of partly the stanchion to the load platform and partly at least one platform flap (18) to the stanchion and possibly a third locking mechanism (32) for locking of an extension part (31) to the stanchion top,
**characterized therein**,
that the stanchion housing (11) is produced from a preferably extruded, in cross section closed hollow profile (12), with at least two longitudinal channels (13,14),
that in the hollow profile (12) openings (22,24,26) are made for insertion of means (20,25,27), which cooperate with respective locking mechanism,
that some of the cooperating parts of the locking mechanisms are coupled together outside the stanchion housing to at least one connected locking unit.
that into at least one of the channels (14) in the hollow profile from the end is inserted said to at least one locking unit connected locking mechanisms or parts thereof, and that the stanchion housing (11) and/or the locking unit/units are completed with means for limiting the movement of the locking mechanisms.

2. Method according to claim 1,
**characterized therein**,
that the hollow profile (12) of the stanchion housing (11) at the extrudation is formed to a rectangular for in cross section, which hollow profile is divided into at least two longitudinal channels (13, 14), of which one - the locking channel (14) - receives the locking mechanisms (28,29,30) and one - the reinforcement channel (13) - at least in its lower end receives reinforcement means (65).

3. Method according to patent claim 1,
**characterized therein**,
that a platform locking mechanism (28) for locking of the stanchion (10) to the platform is pushed endwise into one of the locking channels (14) of the stanchion housing (11),
that one end of a control lever (25) is connected through an opening (24) made in the stanchion housing by a first pivoting shaft (36) to the platform locking mechanism (28),
that a stop shoulder (49) is inserted into the locking channel (14) and is fixed to this by said opening (24),
that one or several interconnected flap locking mechanisms (29) are iserted endwise in the locking channel/channels (14), and is connected by a link arm (38) through the opening (24) made ine the stanchion housing (11) to a second pivoting shaft (37) at the control lever (25), and
that a spring (47) is placed in the flap locking mechanism (29), the spring end of which is fixced to the inside of the locking channel (14).

4. Stanchion for a load platform, produced according to the method stated in claim 1 and of the type, which comprises at least one in a stanchion housing (11) provided platform locking mechanism (28) for locking of the stanchion (10) to a platform holder (20) provided at the load platform, and a flap locking mechanism (29) for locking of at least one load flap (18) to the stanchion and possibly a third stanchion top locking mechanism (32) for locking of an extension part (31) to the stanchion top, and which locking mechanisms can be actuated by means of a common control lever (25),
**characterized therein**,
that the stanchion housing (11) consists of a hollow profile (12) closed in cross section, in which openings (24,26) are made for insertion of means cooperating with respective locking mechanism,
that the interior of the hollow profile (12) is divided into at least two longitudinal channels (13,14), of which the walls of one channel (14) are formed as slide and guide surfaces for at least some of the separate parts of the locking mechanisms (28,29,30), which outside the stanchion housing are interconnectable to at least one connected locking unit, and are endwise insertable into the channel (11), that in the other channel (13) is designed for receiving reinforcement (65) and /or extension means (31), and
that the interior of the stanchion housing and / or the locking unit/ units by openings present in the stanchion housing can be completed by means for cooperation with respective locking unit.

5. Stanchion according to claim 4,
**characterized therein**,
that the parts (50) of the flap locking mechanism (29) and probably the stanchion top locking mechanism are constituted by form parts, preferably of plastic, which are mutually untwistable and axially stiff and easily detachably connected to each other.

6. Stanchion according to claim 4,
**characterized therein**,
that the control lever (25) is provided with two at a distance from each other provided pivoting shafts (36, 37), of which one is articulatedly connected with one (36) end of a locking wedge (33) comprised in the platform locking mechanism (28), by an interconnection link (35),
that the other pivoting shaft (37) of the control arm (25) is articulatedly with one end of a pivot arm (38), which in turn by a third pivoting shaft (42) is articulatedly with a flap locking bolt (40) contained in the flap locking mechanism (29), and
that the displacement movement of the interconnection link (35) and the flap locking bolt (4) in one direction is limited by at least one detachable stop means (49).

7. Stanchion according to claim 5,
**characterized therein**,
that the form parts of the flap locking mechanism (29) are constituted by, partly at least a flap locking bolt (40), which comprises a locking pin (44) and a locking port (43) and at the ends a coupling means (45,46), e.g. a male and a female coupling respectively, for interconnection of several form parts with each other, partly possibly one or several spacing pieces (41), partly a spring (47) acting on the flap locking bolt and partly possibly a locking device (5) for locking of an extension part (31) connectable to the stanchion top.

## Patentansprüche

1. Verfahren zur Herstellung von Rungen (10) für Ladeflächen, wobei die Rungen in einem Rungenmantel (11) mit Verriegelungsvorrichtungen (28,29) versehen sind, die einesteils zum Arretieren der Runge in der Ladefläche und anderenteils zum Arretieren mindestens einer Ladeklappe (18) in der Runge dienen, sowie eventuell einer dritten Verriegelungsvorrichtung (32) zum Arretieren eines Verlängerungsstücks, (31) am oberen Rungenende,
**dadurch gekennzeichnet,**
daß der Rungenmantel (11) vorzugsweise durch Strangpressen aus einem im Querschnitt geschlossenen Hohlprofil (12) mit mindestens zwei in Längsrichtung verlaufenden Kanälen (13,14) gefertigt wird,
daß in das Hohlprofil (12) Öffnungen (22,24,26) zum Einsetzen von Mitteln (20,25,27) eingearbeitet werden, die mit der jeweiligen Verriegelungsvorrichtung zusammenwirken,
daß einige der mit den Verriegelungsvorrichtungen zusammenwirkenden Teile außerhalb des Rungenmantels mit mindestens einer verbundenen Arretiereinheit zusammengekuppelt werden,
daß in mindestens einen der Kanäle (14) im Hohlprofil eine mit einer solchen Arretiereinheit verbundene Verriegelungsvorrichtung oder Teile von ihr eingesetzt und der Rungenmantel (11) und/oder die Arretiereinheit(en) mit Vorrichtungen versehen werden, die die Bewegung der Verriegelungsvorrichtungen begrenzen.

2. Verfahren nach Anspruch 1,
**dadurch gekennzeichnet,**
daß das Hohlprofil (12) des Rungenmantels (11) beim Strangpressen einen rechteckigen Querschnitt erhält, der in mindestens zwei in Längsrichtung verlaufende Kanäle (13,14) unterteilt ist, von denen einer, der Arretierkanal (14) die Verriegelungsvorrichtungen (28,29,30) aufnimmt, während der andere, der Versteifungskanal (13), mindestens in seinem unteren Abschnitt Versteifungsmittel (65) erhält.

3. Verfahren nach Anspruch 1,
**dadurch gekennzeichnet,**
daß eine Ladeflächenarretiervorrichtung (28) zum Arretieren der Runge (10) auf der Ladefläche vom Ende her in einen der Arretierkanäle (14) des Rungenmantels (11) geschoben wird,
daß ein Ende des Betätigungshebels (25) durch eine Öffnung (24) im Rungenmantel über einen ersten Drehzapfen (36) mit der Ladeflächenarretiervorrichtung (28) verbunden wird,
daß ein Anschlagelement (49) in den Arretierkanal (14) eingesetzt und in ihm durch die genannte Öffnung (24) befestigt wird,
daß ein oder mehrere miteinander verbundene Ladeklappenarretiervorrichtung(en) (29) in Längsrichtung in den/die Arretierkanal/kanäle (14) eingesetzt und über einen Verbindungsarm (38) durch die Öffnung (24) im Rungenmantel (11) mit einem zweiten Drehzapfen (37) am Betätigungshebel (25) verbunden wird/werden und
daß eine Feder (47) in der Ladeklappenarretiervorrichtung (29) angeordnet wird, deren Ende an der Innenseite des Arretierkanals (14) befestigt ist.

4. Runge für eine Ladefläche, hergestellt nach dem Verfahren in Anspruch 1, so beschaffen, daß sie mindestens eine Ladeflächenarretiervorrichtung (28) im Rungenmantel (11) zum Arretieren der Runge (10) in einer auf der Ladefläche befindlichen Rungenhalterung (20) und eine Ladeklappenarretiervorrichtung (29) zum Arretieren mindestens einer Ladeklappe (18) an der Runge und eventuell eine dritte Verriegelungsvorrichtung (32) an ihrer Spitze zum Arretieren eines Verlängerungsstücks (31) aufweist, wobei alle Verriegelungsvorrichtungen durch einen gemeinsamen Betätigungshebel (25) betätigt werden,
**dadurch gekennzeichnet,**
daß der Rungenmantel (11) aus einem im Querschnitt geschlossenen Hohlprofil (12) besteht, in das Öffnungen (24,26) zum Einführen von Mitteln eingelassen sind, die mit der jeweiligen Verriegelungsvorrichtung zusammenwirken,
daß das Hohlprofil (12) innen in mindestens zwei in Längsrichtung verlaufende Kanäle (13,14) unterteilt ist, wobei die Wände eines Kanals (14) als Gleit- und Führungsflächen für mindestens einige Teile der Verriegelungsvorrichtungen (28,29,30), die außerhalb des Rungenmantels mit mindestens einer verbundenen Arretiereinheit verkuppelbar sind und in Längsrichtung in den Kanal (14) eingesetzt werden können,
daß der andere Kanal (13) zur Aufnahme von Versteifungsmitteln (65) und/oder Verlängerungsmitteln (31) dient und
daß die im Inneren des Rungenmantels und/oder der Arretiereinheit(en) befindlichen Teile über Öffnungen im Rungenmantel mit den entsprechenden, mit der Verriegelungsvorrichtung zusammenwirkenden Mitteln komplettiert werden können.

5. Runge nach Anspruch 4,
**dadurch gekennzeichnet,**
daß die Teile (50) der Ladeklappenarretiervorrichtung (29) und wahrscheinlich der Kupplungsvorrichtung an der Rungenspitze vorzugsweise aus Plastik gefertigte Formteile sind, die sich nicht gegeneinander verdrehen lassen, axial steif sind und lösbar miteinander verbunden sind.

6. Runge nach Anspruch 4,
**dadurch gekennzeichnet,**
daß der Betätigungshebel (25) über zwei in einigem Abstand voneinander angeordnete Drehbolzen (36,37) verfügt, von denen einer (36) über ein Verbindungsglied (35) an einem Ende des Schließkeils (33) angelenkt ist, der in der Ladeflächenarretiervorrichtung (28) enthalten ist,
daß der andere Drehbolzen (37) des Betätigungshebels (25) an einem Ende des Verbindungsarms (38) angelenkt ist, der wiederum durch einen dritten Drehbolzen (42) an den in der Ladeklappenarretiervorrichtung (29) befindlichen Klappenarretierbolzen (40) angelenkt ist.

7. Runge nach Anspruch 5,
**dadurch gekennzeichnet,**
daß sie einen Arretierstift (44) und einen Arretierschlitz (43) sowie an ihren Enden Kupplungsvorrichtungen (45,46), z.B. je ein eingreifendes und ein aufnehmendes Kupplungselement, zur Verbindung mehrerer Formteile miteinander aufweist, zum Teil eventuell mit einem oder mehreren Abstandsstücken (41), zum Teil mit einer Feder (47), die auf den Klappenarretierbolzen wirkt und zum Teil eventuell mit einem Riegel (50) zum Arretieren des an der Rungenspitze aufsetzbaren Verlängerungsstücks (31).

## Revendications

1. Procédé de fabrication d'étançons (10) pour plate-formes de chargement, lesdits étançons comprenant des mécanismes de verrouillage (28, 29) prévus dans un boîtier d'étançon (11), pour bloquer, pour une part, l'étançon sur la plate-forme de chargement et, pour l'autre, au moins un volet de plate-forme (18) sur l'étançon et, éventuellement, un troisième mécanisme de verrouillage (32) pour bloquer un élément de rallongement (31) sur le haut de l'étançon, caractérisé en ce que le boîtier d'étançon (11) est produit à partir d'un profilé creux (12), fermé en coupe transversale, de préférence extrudé, comprenant au moins deux canaux longitudinaux (13, 14), en ce que dans le profilé creux (12), sont réalisées des ouvertures (22, 24, 26) pour l'introduction de moyens (20, 25, 27) qui coopèrent avec le mécanisme de verrouillage respectif, en ce que certains des organes coopérants des mécanismes de verrouillage sont accouplés ensemble, à l'extérieur du boîtier d'étançon, à au moins une unité de verrouillage associée, en ce que dans au moins l'un des canaux (14) du profilé creux, a partir de l'extrémité, sont introduits lesdits mécanismes de verrouillage reliés à au moins une unité de verrouillage ou des éléments de ceux-ci, et en ce que le boitier d'étançon (11) et/ou la ou les unités de verrouillage sont complétées par des moyens pour limiter le déplacement des mécanismes de verrouillage.

2. Procédé selon la revendication 1, caractérisé en ce que le profilé creux (12) du boîtier d'étançon (11) est mis, à l'extrusion, sous une forme rectangulaire en coupe transversale, ledit profilé creux étant divisé en, au moins, deux canaux longitudinaux (13, 14), l'un d'entre eux, le canal de verrouillage (14), recevant les mécanismes de verrouillage (28, 29, 30) et l'autre, le canal de renforcement (13), recevant des moyens de renforcement (65) , au moins à son extrémité inférieure.

3. Procédé selon la revendication 1 du brevet, caractérisé en ce qu'un mécanisme de verrouillage de plate-forme (28) pour bloquer l'étançon (10) sur la plate-forme est poussé, depuis une extrémité, dans l'un des canaux de verrouillage (14) du boîtier d'étançon (11), en ce qu'une extrémité d'un levier de commande (25) est reliée, à travers une ouverture (24) ménagée dans le boîtier d'étançon, par un premier axe de pivotement (36), au mécanisme de verrouillage de plate-forme (28), en ce qu'une butée d'arrêt (49) est introduite dans le canal de verrouillage (14) et est fixée à celui-ci par ladite ouverture (24), en ce qu'un ou plusieurs mécanismes de verrouillage de volet interconnectés (29) sont introduits, depuis une extrémité, dans le ou les canaux de verrouillage (14) et sont reliés par un bras d'articulation (38), à travers l'ouverture (24) ménagée dans le boîtier d'étançon (11), à un second axe de pivotement (37) situé sur le levier de commande (25), et en ce qu'un ressort (47) est placé dans le mécanisme de verrouillage de volet (29), ressort dont l'extrémité est fixée sur l'intérieur du canal de verrouillage (14).

4. Etançon pour une plate-forme de chargement, produit selon le procédé décrit dans la revendication 1 et du type qui comprend au moins un mécanisme de verrouillage de plate-forme (28) prévu dans un boîtier d'étançon (11), pour bloquer l'étançon (10) sur un support de plate-forme (20) prévu sur la plate-forme de chargement, et un mécanisme de verrouillage de volet (29) pour bloquer au moins un volet de chargement (18) sur l'étançon, et, éventuellement, un troisième mécanisme de verrouillage supérieur d'étançon (32) pour bloquer un élément de rallongement (31) sur le haut de l'étançon, lesdits mécanismes de verrouillage pouvant être actionnés au moyen d'un levier de commande commun (25), caractérisé en ce que le boîtier d'étançon (11) consiste en un profité creux (12) fermé en coupe transversale, dans lequel des ouvertures (24, 26) sont ménagées pour l'insertion de moyens coopérant avec les mécanismes de verrouillage respectifs, en ce que l'intérieur du profilé creux (12) est divisé en au moins deux canaux longitudinaux (13, 14), les parois d'un canal (14) étant réalisées sous forme de surfaces de glissement et de guidage pour au moins certaines des pièces individuelles des mécanismes de verrouillage (28, 29, 30) qui, à l'extérieur du boîtier d'étançon, peuvent être reliés à au moins une unité de verrouillage associée, et peuvent être introduits, depuis une extrémité, dans le canal (11), en ce que l'autre canal (13) est conçu pour recevoir des moyens de renforcement (65) et/ou de rallongement (31), et en ce que l'intérieur du boîtier d'étançon et/ou la ou les unités de verrouillage, par des ouvertures agencées dans le boîtier d'étançon peuvent être complétées par des moyens destinés à coopérer avec l'unité de verrouillage respective.

5. Etançon selon la revendication 4, caractérisé en ce que les pièces (50) du mécanisme de verrouillage de volet (29) et, probablement, du mécanisme de verrouillage supérieur de l'étançon, sont constituées par des pièces moulées, de préférence en matière plastique, qui sont résistantes à une torsion mutuelle et rigides axialement et sont assemblées l'une à l'autre de manière à être facilement démontables.

6. Etançon selon la revendication 4, caractérisé en ce que le levier de commande (25) est pourvu de deux axes de pivotement disposés à distance l'un de l'autre (36, 37), dont un est articulé sur une extrémité (36) d'une cale de blocage (33) comprise dans le mécanisme de verrouillage de plate-forme (28), par une biellette d'interconnexion (35) , en ce que l'autre axe de pivotement (37) du bras de commande (25) est articulé sur une extrémité d'un bras de pivotement (38) qui est articulé, de son côté, par un troisième axe de pivotement (42), sur un pêne de verrouillage de volet (40) contenu dans le mécanisme de verrouillage de volet (29), et en ce que la course de déplacement de la biellette d'interconnexion (25) et du pêne de verrouillage de volet (4), dans une direction, est limitée par au moins un moyen de butée amovible (49).

7. Etançon selon la revendication 5, caractérisé en ce que les pièces moulées du mécanisme de verrouillage de volet (29) sont constituées, pour partie, par au moins un pêne de verrouillage de volet (40) qui comprend un cheville de verrouillage (44) et un orifice de blocage (43) et, aux extrémités, des moyens d'accouplement (45, 46), par exemple, un accouplement mâle et un accouplement femelle, respectivement, pour relier mutuellement plusieurs pièces moulées entre elles, pour partie éventuellement, par une ou plusieurs entretoises (41), pour partie par un ressort (47) agissant sur le pêne de verrouillage de volet et pour partie, éventuellement, par un dispositif de verrouillage (5) pour bloquer un élément de rallongement (31) pouvant être relié au haut de l'étançon.
